# EUROPÄISCHE PATENTSCHRIFT

(11) **EP 0 803 719 B1**
(45) Veröffentlichungstag und Bekanntmachung des Hinweises auf die Patenterteilung: **05.07.2000**
(21) Anmeldenummer: 97106209.6
(22) Anmeldetag: 16.04.1997
(51) Int. Cl.: G01L 5/04, B21B 38/02

(54) **Umlenkmessrolle**
Turnover measuring roll
Rouleau mesureur de renvoi

(30) Priorität: 27.04.1996 DE 19616980
(43) Veröffentlichungstag der Anmeldung: 29.10.1997
(73) Patentinhaber: BETRIEBSFORSCHUNGSINSTITUT VDEh, INSTITUT FÜR ANGEWANDTE FORSCHUNG GmbH, D-40237 Düsseldorf (DE)
(72) Erfinder: Neuschütz, Eberhard, 40880 Ratingen (DE); Thies, Helmut, 41564 Kaarst (DE); Mücke, Gert, 40724 Hilden (DE)
(74) Vertreter: König, Reimar, Dr.-Ing.

(56) Entgegenhaltungen:
- DE-A- 2 944 723
- DE-A- 3 326 593
- DE-A- 3 701 680
- DE-A- 4 236 657

## Beschreibung

Die Erfindung betrifft eine Umlenkmeßrolle zum Messen der Spannungsverteilung von biegsamen, in ihrer Längsrichtung bewegten Bändern.

Zum Messen der Spannungsverteilung wird der Gegenstand der Messung, beispielsweise ein Stahlband beim Kaltwalzen, über eine Umlenkrolle geführt. Die Messung erfolgt durch in der Rolle befindliche Kraftmeßgeber, mit denen das umlaufende Band abgetastet wird.

Das Band übt eine Kraft auf die Rolle aus, wodurch diese einer Biegebelastung ausgesetzt ist. Die Rolle wird durch die Biegekraft elastisch deformiert. Der Rollenquerschnitt wird dadurch in eine elliptische Form gezwungen, deren längere Achse parallel zum Bandverlauf liegt. Diese Verformung der Rolle kann dem Meßgeber ein durch das Band bewirktes Signal vortäuschen, wenn sich die Verformung auf den Meßgeber oder dessen Abdeckung überträgt und so eine Kraft ausübt, die der Meßgeber nicht von der vom Band ausgeübten Kraft unterscheiden kann. Das führt zu Verfälschungen der Meßergebnisse.

Dieses Problem löst die deutsche Offenlegungsschrift 42 36 657 durch eine Umlenkmeßrolle, bei der Abdeckungen in zylindrischen Ausnehmungen befindlicher Kraftmeßgeber unmittelbar an der Oberfläche des zu prüfenden Bandes anliegen und sich zwischen der Innenwandung der Ausnehmung und der Abdeckung ein umlaufender Spalt befindet. Der Spalt verhindert, daß in der Meßrolle wirksame Kräfte und Momente über die Abdeckung auf den Meßgeber wirken. Die Abdeckung ist dabei zentriert und weist einen umlaufenden schmalen Spalt auf, der bis zum Grund der Ausnehmung reicht.

Das Einstellen dieses Spaltes ist zeitaufwendig und kompliziert; es läßt sich häufig nur schwer realisieren und führt zu einer Erhöhung der Betriebs- bzw. Installationskosten der Umlenkmeßrolle.

Eine weitere Meßrolle ist aus der US-Patentschrift 5 285 684 bekannt; sie besteht aus einzelnen, nebeneinander angeordneten, von achsparallelen Bolzen durchsetzten und zusammengehaltenen Scheiben. Die Scheiben besitzen Fenster, in denen sich die Kraftmeßgeber befinden. Während die Scheiben im Kernbereich der Meßrolle Seite an Seite liegen, befindet sich im Bereich der Meßgeber zwischen je zwei Scheiben ein Spalt, der eine gegenseitige Beeinflussung der oberflächennahen Bereiche benachbarter Scheiben verhindern soll. Um die Gefahr eines Eindringens von Kühlmittel und Schmutz in die Spalte zu verringern, sind die einander gegenüberliegenden Stirnseiten benachbarter Scheiben mit kreisförmigen Rillen versehen, die paarweise jeweils einen Dichtungsring aufnehmen. Da die Rillen den Dichtungsring jeweils von zwei einander gegenüberliegenden Seiten her teilweise umgreifen, müssen sie zwangsläufig in einem gewissen Abstand von der Meßrollenoberfläche verlaufen. Dieser Abstand vergrößert sich noch dadurch, daß die Meßrolle, bezogen auf den Durchmesser ein gewisses Übermaß benötigt, das ein mehrmaliges Abschleifen der Rollenmantelfläche zum Beseitigen betriebsbedingter Oberflächenfehler erlaubt. Demzufolge weist die bekannte Meßrolle außerhalb der Dichtungsringe zwischen je zwei Scheiben einen mehr oder minder tiefen umlaufenden Spalt auf. Die sich dem Bund darbietende Rollenoberfläche ist dementsprechend unregelmäßig.

Ähnlich liegen die Verhältnisse bei einer aus der deutschen Offenlegungsschrift 29 44 723 bekannten, ebenfalls aus nebeneinander angeordneten und über Zuganker miteinander verspannten Scheiben bzw. Ringen, die teilweise mit ebenfalls in Fenstern angeordneten Kraftmeßgebern versehen sind. Zwischen den peripheren Stirnflächen nebeneinander angeordneter Scheiben befindliche umlaufende Spalte können dabei mit Kunststoff ausgefüllt sein.

Hingegen beschreibt die deutsche Offenlegungsschrift 33 26 593 eine gleichartige Meßrolle, bei der Zentrierringe aus Kunststoff die einzelnen Scheiben in axialer Richtung aufeinander ausrichten.

Der Erfindung liegt das Problem zugrunde, den zeitaufwendigen und zum Teil auch ungenauen Einbau der Meßgeber und, sofern vorhanden, auch deren Abdeckungen, zu verringern, darüber hinaus aber auch das Eindringen von Schmutz, insbesondere Metallabrieb, in die Ausnehmungen zu verhindern.

Der Lösung des Problems liegt der Gedanke zugrunde, das aufwendige Einstellen des Spaltes bzw. das Zentrieren etwaiger Abdeckungen und/oder der Kraftmeßgeber in ihren Ausnehmungen dadurch zu vermeiden, daß der Spalt mit einem Material verschlossen ist, das den Meßgeber bzw. dessen Abdeckung in eine optimale Position zwingt, aber einen kleineren Elastizitätsmodul als die Meßgeberabdeckung und die Innenwand der Ausnehmung besitzt und daher Störkräfte und -momente nicht auf den Meßgeber überträgt.

Im einzelnen wird das Problem dadurch gelöst, daß beispielsweise die Umfangsfläche des Meßgebers oder einer Meßgeberabdeckung mit einer Kunststoffschicht versehen ist, die den Spalt zur Wandung der Ausnehmung hin verschließt. Die Kunststoffschicht besitzt eine Dicke, die zunächst größer ist als die Differenz zwischen dem Durchmesser des Meßgebers bzw. einer Meßgeberabdeckung und dem Durchmesser der Ausnehmung, d.h. größer als der Spalt zwischen Meßgeber bzw. Abdeckung und Innenwandung.

Dementsprechend besitzt der ummantelte Meßgeber bzw. die ummantelte Meßgeberabdeckung gegenüber der Ausnehmung bei Raumtemperatur ein Übermaß.

Zum Einsetzen eines Meßgebers, beispielsweise mit einer beschichteten Meßgeberabdeckung größeren Durchmessers als der Meßgeber in die Ausnehmung der Umlenkmeßrolle kann die Abdeckung unterkühlt und der Rollenkörper erwärmt werden. Dadurch verkleinert sich der Umfang der Abdeckung mit ihrer Beschichtung, während sich der Durchmesser der Ausnehmung infolge Wärmedehnung vergrößert. Unter diesen Umständen läßt sich die Abdeckung problemlos in die Ausnehmung einsetzen. Beim Angleichen beider Körper an die Raumtemperatur wird die Abdeckung selbsttätig zentriert, so daß ein gleichmäßiger, aber mit Kunststoff verschlossener Spalt zwischen der Abdeckung und der Ausnehmung entsteht. In ähnlicher Weise läßt sich ein Kraftmeßgeber ohne Abdeckung in die Ausnehmung einbringen. In diesem Falle ist die Abdeckung gleichsam in das Meßgebergehäuse integriert, dessen Kopf dann bis zur Oberfläche der Meßrolle reicht und einen größeren Durchmesser besitzen kann als der restliche Teil des Meßgebergehäuses. Abdeckung und Meßgeber bilden dann eine Einheit.

Das aufwendige und schwierige Zentrieren der aus dem Stand der Technik bekannten Meßgeber oder Meßgeberabdeckungen ist somit bei der erfindungsgemäßen Umlenkmeßrolle überflüssig. Dadurch vereinfacht sich der Montageaufwand der Meßrolle erheblich. Das erfindungsgemäße Zentrieren schließt darüber hinaus ein nachträgliches Verrutschen der Abdeckung bzw. des Meßgebers in der Ausnehmung aus. Die Zwangsposition, die die Meßgeberabdeckung und der Meßgeber bei der erfindungsgemäßen Meßrolle einnehmen, ist selbst bei dauerhaftem Einsatz positionsstabil und verschleißfrei. Gleichzeitig werden die von einer Rollenverformung ausgehenden Störkräfte und -momente von der Kunststoffschicht aufgenommen und nicht in die Abdeckung bzw. den Meßgeber eingeleitet. Der Elastizitätsmodul der Kunststoffschicht ist vorteilhafterweise so gewählt, daß er ein sicheres Zentrieren ermöglicht, ohne Kräfte von der Rolle auf die Abdeckung zu übertragen.

Ein weiterer Vorteil der erfindungsgemäßen Umlenkmeßrolle liegt in der Abdichtung des Spaltes zwischen Meßgeberabdeckung bzw. Meßgeber und Ausnehmung durch den Kunststoff. Feinpartikularer Metallabrieb, der bei Messungen an Stahlband ein besonderes Problem für die zuverlässige Funktion der Meßrolle darstellt, kann nicht mehr in den Spalt eindringen und die Funktion des Meßgebers behindern.

Die Kunststoffschicht braucht sich nur im oberen Teil der Ausnehmung zu befinden; sie kann vor dem Einbringen auch auf der Wandung der Ausnehmung angeordnet sein.

Ein Eindringen von Schmutz wird besonders wirksam vermieden, wenn sich der im Spalt befindliche Kunststoff bis zur Rollenoberfläche erstreckt. Dadurch wird ein vollständiges Abdichten des Spaltes zwischen Meßgeber und Innenwand der Ausnehmung erreicht und ergibt sich - gegebenenfalls nach einem Abschleifen - eine völlig glatte Rollenoberfläche.

Im Folgenden wird die Erfindung anhand eines in der Zeichnung dargestellten Ausführungsbeispiels des näheren erläutert. In der Zeichnung zeigen:

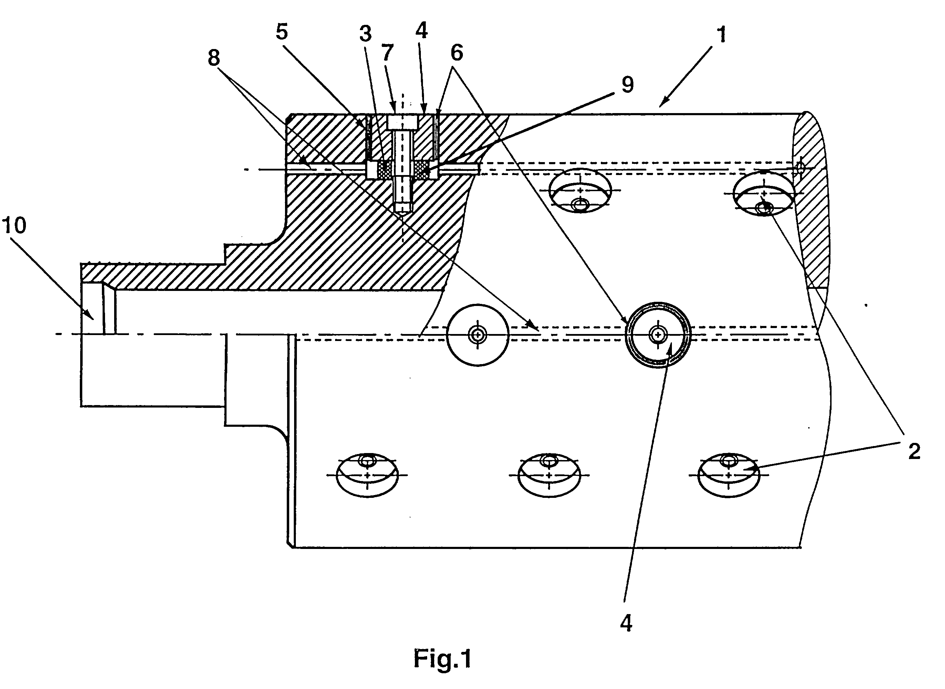

- Fig. 1: Eine Meßrolle mit in Ausnehmungen eingesetzten Meßgebern und deren Abdeckungen;

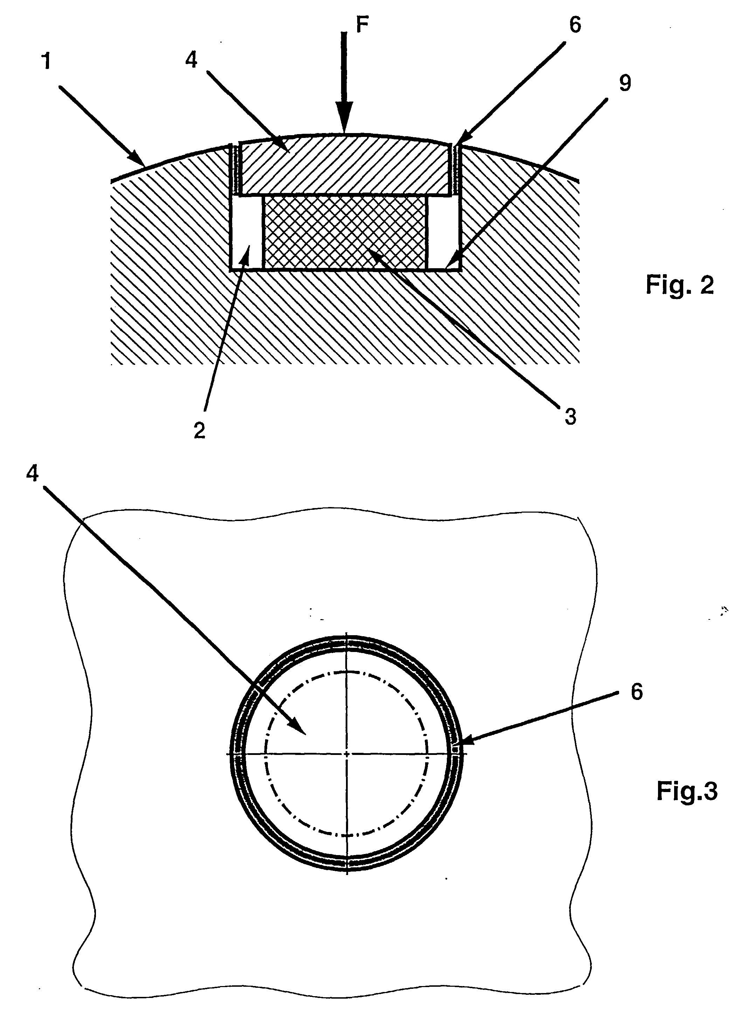

- Fig. 2: einen Schnitt durch einen in der Rolle befindlichen Meßgeber mit Abdeckung der Fig. 1;
- Fig. 3: eine Draufsicht auf die Rollenoberfläche mit der Abdeckung des Meßgebers der Fig. 2;

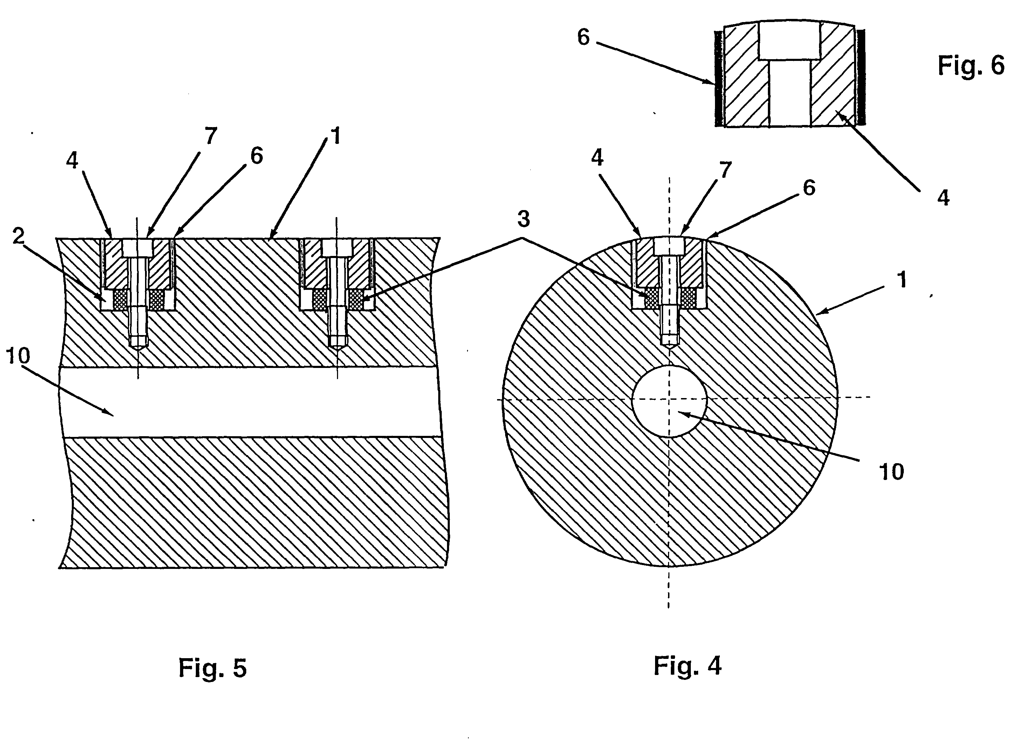

- Fig. 4: einen Querschnitt durch die Meßrolle mit einer mittels Schraubbolzen fixierten Meßgeberabdeckung;
- Fig. 5: einen Längsschnitt durch die Meßrolle der Fig. 4 mit Meßgebern und deren Abdeckungen und
- Fig. 6: einen axialen Längsschnitt durch die Rolle der Fig. 4.

Die Umlenkmeßrolle 1 besitzt eine Vielzahl von Ausnehmungen 2. In die Ausnehmungen 2 sind Piezomeßgeber 3 mit Abdeckungen 4 eingesetzt. Die Meßgeber 3 sitzen zwischen dem Boden 9 der Ausnehmung 2 und der Abdeckung 4. Die Abdeckung 4 ist mit einer Kunststoffschicht 6 versehen. Zwischen der Abdeckung 4 des Meßgebers 3 und der Ausnehmung 2 der Rolle 1 befindet sich infolge der unterschiedlichen Durchmesser der Abdeckung 4 und der Ausnehmung 2 ein Spalt 5, der bei eingesetzter Abdeckung durch die Kunststoffschicht 6 verschlossen ist.

Die Durchmesser der Ausnehmungen 2 sind so gewählt, daß die Abdeckung 4 mit der Kunststoffschicht 6 vor dem Einsetzen in die Ausnehmung einen größeren Durchmesser als die Ausnehmung besitzt.

In der Umlenkmeßrolle 1 befinden sich Bohrungen 8, die die Meßleitungen der Meßgeber aufnehmen. Die Bohrungen können zu einer Zentralbohrung 10 in der Rollenachse geführt sein, durch die die Meßleitungen aus der Umlenkmeßrolle herausgeführt werden (nicht dargestellt).

Für den Einbau der Abdeckung 4 mit der Kunststoffschicht 6 in die Ausnehmung 2 wird zunächst die Rolle erwärmt, so daß sich der Durchmesser der Ausnehmung 2 infolge Wärmedehnung vergrößert, und die Abdeckung 4 mit der Kunststoffschicht 6 unterkühlt, so daß sich deren Durchmesser verkleinert. Daraufhin läßt sich die Abdeckung 4 mit der Kunststoffschicht 6 problemlos in die vergrößerte Ausnehmung 2 einsetzen. Beim Erwärmen der Abdeckung infolge des Temperaturunterschiedes gegenüber der Meßrolle und beim Abkühlen der Rolle auf Raumtemperatur verfestigt sich der Sitz der Abdeckung in der Ausnehmung, wobei die Abdeckung dadurch zentriert wird, daß der Spalt zwischen der Ausnehmung und der Abdeckung gleichmäßig durch die Kunststoffschicht ausgefüllt ist.

Die Abdeckung 4 wird nach dem Einsetzen mittels einer Spannschraube 7 in der Ausnehmung 2 fixiert. Der Meßgeber 3 ist dann als Ring ausgebildet, der die Spannschraube 7 umgibt.

Beim Messen wirkt die Radialkraft des umlaufenden Bandes in Richtung des Pfeils F direkt auf die Meßgeberabdeckung 4, die ihrerseits den Meßgeber 3 beaufschlagt und bei diesem ein Meßsignal bewirkt, indem sie ihn gegen den Boden 9 der Ausnehmung 2 drückt. Die Kunststoffschicht 6 besitzt einen vorzugsweise wesentlich kleineren Elastizitätsmodul als die Abdeckung 4 und die Rolle 1 bzw. das Wandmaterial im Bereich der Ausnehmung 2. Die verformungsbedingten Störkräfte und - momente der Rolle 1 werden daher nicht auf die Abdeckung 4 und damit auf den Meßgeber übertragen, sondern führen lediglich zu einer Verformung der Kunststoffschicht 6. Eine Verfälschung der Meßergebnisse wird somit verhindert, während gleichzeitig ein zentrierter sicherer Sitz der Abdeckung 4 in der Ausnehmung 2 gewährleistet ist.

Wie in der Zeichnung dargestellt, füllt die Kunststoffschicht den Spalt 5 bis zur Oberfläche der Rolle 1 und der Abdeckung 4 aus, was ein Eindringen von störenden Schmutzpartikeln verhindert und - gegebenenfalls nach einer Oberflächenbearbeitung - eine insgesamt glatte Rollenoberfläche ergibt.

## Patentansprüche

1. Umlenkmeßrolle für die Ermittlung der Spannungsverteilung beim Walzen dünner Bänder, insbesondere beim Kaltwalzen dünnen Stahlblechs, mit
- in Ausnehmungen (2) mit Abstand zur Wandung der Ausnehmungen angeordneten Kraftmeßgebern (3) und
- jeweils einer den Spalt zwischen Kraftmeßgeber und Wandung verschließenden Kunststoffschicht (6).

2. Umlenkmeßrolle nach Anspruch 1, dadurch gekennzeichnet, daß die Kunststoffschicht (6) einen geringeren Elastizitätsmodul besitzt als die Umlenkmeßrolle (1).

3. Umlenkmeßrolle nach Anspruch 1 oder 2, dadurch gekennzeichnet, daß die Dicke der Kunststoffschicht (6) in situ 0,01 und 0,05 mm beträgt.

4. Umlenkmeßrolle nach einem der Ansprüche 1 bis 3, dadurch gekennzeichnet, daß sich der Spalt (5) zwischen einer Meßgeberabdeckung (4) und der Wandung der Ausnehmung (2) befindet.

5. Umlenkmeßrolle nach einem der Ansprüche 1 bis 4, dadurch gekennzeichnet, daß die Ausnehmung (2) einen kreisförmigen Querschnitt besitzt.

6. Umlenkmeßrolle nach einem der Ansprüche 1 bis 5, dadurch gekennzeichnet, daß die Beaufschlacgungsfläche der Meßrolle (1) eine einheitliche Reliefausbildung aufweist.

7. Umlenkmeßrolle nach einem der Ansprüche 1 bis 6, dadurch gekennzeichnet, daß der Kraftmeßgeber (3) als Ring ausgebildet ist.

8. Umlenkmeßrolle nach Anspruch 7, dadurch gekennzeichnet, daß der Meßgeber (3) mittels eines zentralen Stehbolzens (7) auf dem Boden (9) der Ausnehmung (2) verspannt ist.

9. Umlenkmeßrolle nach Anspruch 7 oder 8, dadurch gekennzeichnet, daß der Meßgeber (3) mittels eines Schraubbolzens (7) auf dem Boden (9) verspannt ist.

10. Verfahren zum Herstellen einer Umlenkmeßrolle mit in Ausnehmungen mit Abstand zur Wandung der Ausnehmungen angeordneten Kraftmeßgebern nach einem der Ansprüche 1 bis 9, **dadurch gekennzeichnet**, daß die Umfangsfläche der Kraftmeßgeber oder von Meßgeberabdeckungen mit einer Kunststoffschicht versehen wird, deren Dicke größer ist als die Differenz zwischen dem Durchmesser des Kraftmeßgebers bzw. der Meßgeberabdeckung und dem Durchmesser der Ausnehmungen der Meßrolle, daß die Meßgeber unterkühlt, die Meßrolle erwärmt und die Meßgeber sodann in die Ausnehmungen eingesetzt werden.

## Claims

1. Deflection and measurement roller for determining the stress distribution upon the rolling of thin strips, in particular the cold rolling of thin steel sheet, having
- force pick-ups (3) arranged in recesses (2), spaced from the walls of the recesses and
- in each case, a plastics layer (6) filling the gap between force pick-up and wall.

2. Deflection and measurement roller according to claim 1,
characterised in that,
the plastics layer (6) has a lesser modulus of elasticity than the deflector and measurement roller (1) .

3. Deflection and measurement roller according to claim 1 or 2,
characterised in that,
the thickness of the plastics layer (6), in situ, is 0.01 to 0.05 mm.

4. Deflection and measurement roller according to any of claims 1 to 3,
characterised in that,
the gap (5) is located between a picas-up cover (4) and the wall of the recess (2).

5. Deflection and measurement roller according to any of claims 1 to 4,
characterised in that,
the recess (2) has a circular cross-section.

6. Deflection and measurement roller according to any of claims 1 to 5,
characterised in that,
the contact surface of the measurement roller has a uniform relief development.

7. Deflection and measurement roller according to any of claims 1 to 6,
characterised in that,
the force pick-up is formed as a ring.

8. Deflection and measurement roller according to claim 7,
characterised in that,
the pick-up (3) is braced on the floor (9) of the recess (2) by means of a central stay bolt (7).

9. Deflection and measurement roller according to claim 7 or 8,
characterised in that,
the pick-up (3) is braced on the floor (9) by means of a screw bolt (7).

10. Method of producing a deflection and measurement roller having force pick-ups arranged in recesses, spaced from the walls of the recesses, in accordance with any of claims 1 to 9,
characterised in that,
the peripheral surfaces of the force pick-ups or of pick-up covers are provided with a plastics layer the thickness of which is greater than the difference between the diameter of the force pickup or the pick-up cover and the diameter of the recesses in the measurement roller, and in that the pick-ups are undercooled, the measurement roller is heated, and the pick-ups then put in place in the recesses.

## Revendications

1. Rouleau de renvoi mesureur pour la détermination de la distribution des contraintes pendant le laminage de bandes minces, en particulier pendant le laminage à froid de feuillard d'acier mince, comprenant
- des capteurs dynamométriques (3) disposés dans des évidements formant des logements (2), à distance de la paroi des logements, et
- une couche de matière plastique (6) fermant la fente entre le capteur dynamométrique et la paroi.

2. Rouleau de renvoi mesureur selon la revendication 1, caractérisé en ce que la couche de matière plastique (6) possède un plus faible module d'élasticité que le rouleau de renvoi mesureur (1).

3. Rouleau de renvoi mesureur selon la revendication 1 ou 2, caractérisé en ce que l'épaisseur de la couche de matière plastique (6) une fois en place est comprise entre 0,01 et 0,05 mm.

4. Rouleau de renvoi mesureur selon une des revendications 1 à 3, caractérisé en ce que la fente (5) se trouve entre un recouvrement de capteur (4) et la paroi du logement (2).

5. Rouleau de renvoi mesureur selon une des revendications 1 à 4, caractérisé en ce que le logement (2) possède une section droite circulaire.

6. Rouleau de renvoi mesureur selon une des revendications 1 à 5, caractérisé en ce que la surface sollicitée par la bande du rouleau mesureur (1) présente un relief uniforme.

7. Rouleau de renvoi mesureur selon une des revendications 1 à 6, caractérisé en ce que le capteur dynamométrique (3) est réalisé sous la forme d'une bague.

8. Rouleau de renvoi mesureur selon la revendication 7, caractérisé en ce que le capteur (3) est serré sur le fond (9) du logement (2) au moyen d'un goujon fileté (7) central.

9. Rouleau de renvoi mesureur selon la revendication 7 ou 8, caractérisé en ce que le capteur (3) est serré sur le fond (9) au moyen d'une vis (7).

10. Procédé pour fabriquer un rouleau de renvoi mesureur comprenant des capteurs dynamométriques disposés dans des logements, à distance de la paroi des logements, selon une des revendications 1 à 9, caractérisé en ce que la surface périphérique des capteurs dynamométriques ou de recouvrements de capteurs est pourvue d'une couche de matière plastique dont l'épaisseur est plus grande que la différence entre le diamètre du capteur dynamométrique, ou du recouvrement de capteur, et le diamètre des logements du rouleau mesureur, qu'on surrefroidit les capteurs et échauffe le rouleau mesureur puis qu'on met les capteurs en place dans les logements.
